# EUROPÄISCHE PATENTANMELDUNG

(11) **EP 4 664 271 A1**
(43) Veröffentlichungstag der Anmeldung: **17.12.2025**
(21) Anmeldenummer: 24182380.6
(22) Anmeldetag: 14.06.2024
(51) Int. Cl.: G06F 8/30, G06N 20/00

(54) **AUTOMATISIERTE ANPASSUNG VON EMBEDDED SOFTWARE**

(71) Anmelder: Robert Bosch GmbH, 70442 Stuttgart (DE)
(72) Erfinder: Quante, Jochen, 71640 Ludwigsburg (DE); Woehrle, Matthias, 74321 Bietigheim-Bissingen (DE); Hecking-Harbusch, Jesko, 71229 Leonberg (DE)

(57) **Zusammenfassung**

Offenbart wird ein computer-implementiertes Verfahren für die automatisierte Erzeugung eines Codeelements eines Code einer Software, umfassend Erzeugen, via ein Maschinenlernmodell, des Codeelements basierend auf einer sprachlichen Vorgabe an das zu erstellende Codeelement und einem Schnittstellenprüfkriterium, das von dem zu erstellenden Codeelement erfüllt werden soll, optional wobei ein Prompt an das Maschinenlernmodell die sprachliche Vorgabe und das Schnittstellenprüfkriterium umfasst; und Prüfen, ob das Codeelement das Schnittstellenprüfkriterium erfüllt, wobei ein Prüfergebnis resultiert.

## Beschreibung

### Stand der Technik

Software wie z.B. eingebettete Software (englisch: embedded software) zum Steuern, Regeln und/oder Überwachen technischer Systeme, insbesondere cyberphysischer Systeme wie z.B. Recheneinheiten eines Fahrzeugs und/oder eines Roboters, weist üblicherweise einen hohen Komplexitätsgrad auf. Aufgrund dessen ist es für einzelne Softwareingenieure und selbst für ganze Softwareentwicklungsabteilungen herausfordernd, den Überblick über die Software und ihre Änderungen, insbesondere in ihrem gesamten Lebenszyklus (Entwicklung, Test, Produktion und Wartung) zu behalten.

Anpassungen und/oder Umschreibungen der Software können im gesamten Lebenszyklus notwendig sein, insbesondere aber in der Entwicklungs- und Testphase. Zum Beispiel müssen erkannte Fehler oder Schwachstellen fortlaufend behoben werden und/oder muss die Software an eine neue und/oder geänderte Funktionalität angepasst werden. Es kann auch wünschenswert sein, den Code hinsichtlich geänderter Randbedingungen bezüglich Laufzeit, Speichernutzung, Lesbarkeit und/oder Wartbarkeit anzupassen.

Maschinenlernmodelle, insbesondere Foundation Models oder Large Language Models (LLMs) können basierend auf einem Prompt - z.B. eine natürlichsprachliche Anweisung an das Maschinenlernmodell - Code oder Teile davon (nachfolgend: Codeelemente) erzeugen. Dies kann zum Beispiel dazu genutzt werden, um einen existierenden Code um ein oder mehrere Codeelemente zu erweitern oder zu refaktorieren, d.h. ein oder mehrere bestehende Teile des Codes durch ein oder mehrere Codeelemente zu ersetzen, insbesondere hinsichtlich der geänderten Randbedingungen.

Da Maschinenlernmodelle halluzinieren können, fehlt es aber bisher an Garantien über die Korrektheit der von dem Maschinenlernmodell erzeugten Codeelemente und/oder dafür, dass diese Codeelemente zum und in den Code passen. Es ist auch möglich, dass der erzeugte Code z.B. nicht einmal kompilierbar ist oder die an ihn gestellten Anforderungen nicht oder nicht vollständig erfüllt.

Der Offenbarung liegt daher das Problem zugrunde, automatisiert aber dennoch verlässlich Code einer Software überarbeiten zu können, mithin geeignete Codeelemente für einen Code zu erzeugen.

### Offenbarung der Erfindung

Ein erster allgemeiner Aspekt der vorliegenden Offenbarung betrifft ein computer-implementiertes Verfahren für die automatisierte Erzeugung eines Codeelements eines Code einer Software. Das Verfahren umfasst Erzeugen 120, via ein Maschinenlernmodell, des Codeelements basierend auf einer sprachlichen Vorgabe an das zu erstellende Codeelement und einem Schnittstellenprüfkriterium, das von dem zu erstellenden Codeelement erfüllt werden soll. Ein Prompt an das Maschinenlernmodell kann die sprachliche Vorgabe und das Schnittstellenprüfkriterium umfassen. Das Verfahren umfasst weiterhin Prüfen, ob das Codeelement das Schnittstellenprüfkriterium erfüllt, wobei ein Prüfergebnis resultiert.

Die Software kann dafür ausgelegt sein, ein technisches System, insbesondere ein cyber-physisches System, insbesondere mindestens eine Recheneinheit eines Fahrzeugs und/oder eines Roboters, zu steuern, zu regeln und/oder zu überwachen. Insbesondere kann die Software eine eingebettete Software (englisch: embedded Software) sein. Das Verfahren kann in einer elektronischen Programmierumgebung ausgeführt werden.

Das Verfahren kann weiterhin Integrieren des Codeelements in den Code, zumindest wenn das Prüfergebnis hinreichend positiv ist, umfassen, wobei ein überarbeiteter Code resultiert. Der Code kann um das Codeelement erweitert werden oder ein vorheriges Codeelement im Code kann durch das Codeelement ersetzt werden. Das Verfahren kann weiterhin Ausführen des überarbeiteten Code (z.B. in kompilierter Form) in einem technischen System, insbesondere einem cyber-physischen System, insbesondere in einer Recheneinheit eines Fahrzeugs und/oder eines Roboters umfassen.

Ein zweiter allgemeiner Aspekt der vorliegenden Offenbarung betrifft ein computer-implementiertes Verfahren zum weiteren Trainieren eines Maschinenlernmodells, wobei das Maschinenlernmodell dafür ausgelegt ist, ein Codeelement eines Code einer Software basierend auf einer sprachlichen Vorgabe an das zu erstellende Codeelement und einem Schnittstellenprüfkriterium, das von dem zu erstellenden Codeelement erfüllt werden soll, zu erzeugen. Das Verfahren umfasst Anpassen des Maschinenlernmodells basierend auf einem Prüfergebnis, wobei das Prüfergebnis durch Prüfen, ob das Codeelement das Schnittstellenprüfkriterium erfüllt, resultiert. Das Verfahren nach dem zweiten allgemeinen Aspekt (oder einer Ausführungsform) kann, muss aber nicht nach dem Verfahren nach dem ersten allgemeinen Aspekt (oder einer Ausführungsform davon) ausgeführt werden. Das Codeelement kann nach dem Verfahren für die automatisierte Erzeugung eines Codeelements eines Code einer Software nach dem ersten allgemeinen Aspekt (oder einer Ausführungsform davon) erzeugt und geprüft worden sein. Ein dritter allgemeiner Aspekt der vorliegenden Offenbarung betrifft ein Computer-System, das dafür ausgelegt ist, das computer-implementierte Verfahren für die automatisierte Erzeugung eines Codeelements eines Code einer Software nach dem ersten allgemeinen Aspekt (oder einer Ausführungsform davon) und/oder das computer-implementiertes Verfahren zum weiteren Trainieren eines Maschinenlernmodells nach dem zweiten allgemeinen Aspekt (oder einer Ausführungsform davon) auszuführen.

Ein vierter allgemeiner Aspekt der vorliegenden Offenbarung betrifft ein Computer-Programm, das dafür ausgelegt ist, das computer-implementierte Verfahren für die automatisierte Erzeugung eines Codeelements eines Code einer Software nach dem ersten allgemeinen Aspekt (oder einer Ausführungsform davon) und/oder das computer-implementiertes Verfahren zum weiteren Trainieren eines Maschinenlernmodells nach dem zweiten allgemeinen Aspekt (oder einer Ausführungsform davon) auszuführen.

Ein fünfter allgemeiner Aspekt der vorliegenden Offenbarung betrifft ein computer-lesbares Medium oder Signal, das das Computer-Programm nach dem vierten allgemeinen Aspekt (oder einer Ausführungsform davon) speichert und/oder enthält.

Das in dieser Offenbarung vorgeschlagene Verfahren nach dem ersten Aspekt (oder einer Ausführungsform davon) ist auf die automatisierte Erzeugung eines Codeelements eines Code einer Software gerichtet.

Durch das hier vorgeschlagene Verfahren kann ein Code einer Software an einer oder mehreren Stellen gezielt überarbeitet werden. So kann zum Beispiel ein Teil des Code der Software durch ein erzeugtes Codeelement ersetzt werden. In einem anderen Beispiel kann der Code der Software an einer Stelle um ein erzeugtes Codeelement erweitert werden. Ein solches Codeelement wird hier basierend auf einem Schnittstellenprüfkriterium durch das Maschinenlernmodell erstellt. Ehe aber das erzeugte Codeelement in den Code integriert werden kann, muss z.B. das Codeelement das Schnittstellenprüfkriterium erfüllen. Dadurch wird sichergestellt, dass das Codeelement zum Code passt. In dem hier vorgeschlagenen Verfahren wird also zunächst ein hinreichend großes Maschinensprachverständnis des Maschinenlernmodells genutzt, sodann aber durch automatisiertes Prüfen sichergestellt, dass das erzeugte Codeelement das Schnittstellenprüfkriterium erfüllt. Die maschinelle und zu Halluzinationen neigende Kreativität des Maschinenlernmodells wird hier genutzt, aber zugleich insoweit kanalisiert, als letztlich nur passende Codeelemente für die Integration im Code zur Auswahl stehen. Dadurch wird die Qualität des Code der Software, mithin die Qualität des technischen System, insbesondere des cyber-physischen System, insbesondere mindestens der einen Recheneinheit des Fahrzeugs und/oder des Roboters, die durch die Software gesteuert, geregelt und/oder überwacht werden, gewährleistet. Zugleich wird der Arbeitsaufwand erheblich reduziert. Dadurch können verlässliche Änderungen des Code öfter und einfacher durchgeführt werden. Dadurch kann die Qualität der Software verbessert werden. Der hohe Grad der Automatisierung ermöglicht zudem auch die automatisierte Erzeugung einer Vielzahl von Codeelementen. Insbesondere kann dank der Automatisierung so oft ein Codeelement erzeugt werden, bis eines davon das Schnittstellenprüfkriterium erfüllt. Vorteilhaft erweist sich hier insbesondere die Variabilität (z.B. durch eine Zufallsauswahl) in der Ausgabe des Maschinenlernmodells (was im Fachjargon als Temperatur bezeichnet werden kann). In anderen Worten, selbst in Wiederholungen basierend auf identischem Input kann das Maschinenlernmodell unterschiedliche Ausgaben erzeugen. Alternativ oder zusätzlich kann auch die sprachliche Vorgabe an das zu erstellende Codeelement und/oder das Schnittstellenprüfkriterium angepasst werden.

Vorteilhaft können im hier vorgeschlagenen Verfahren Prompts an das Maschinenlernmodell, insbesondere an ein Large Language Model (LLM), erweitert werden, um Eigenschaften, wie z.B. Wertebereiche, welche von den Eingangswerten und Ausgangswerten des zu erzeugenden Codeelements erfüllt werden müssen. Diese Eigenschaften können zum Beispiel durch Vorwärts- und Rückwärtsrechnen des schon existierenden Code mittels kompositionaler Verifikation mit abstrakter Interpretation erhalten werden. Alternativ oder zusätzlich können sie von (manuellen) Codeannotationen stammen. In einem zweiten Schritt wird das von dem Maschinenlernmodell erzeugte Codeelement automatisch in einem Verifikationsschritt auf das Einhalten dieser Eigenschaften überprüft. Dadurch wird sichergestellt, dass das von dem Maschinenlernmodell erzeugte Codeelement, mithin der resultierende Code Garantien bezüglich bestimmter Eigenschaften erfüllt, z.B. das Einhalten bestimmter Wertebereiche, formuliert als Vor- und Nachbedingungen sowie Invarianten. Konventionell liegen keinerlei Garantien für das erzeugte Codeelement vor, während durch das hier vorgeschlagene Verfahren sichergestellt ist, dass das erzeugte Codeelement mindestens mit allen möglichen Aufrufen im bestehenden Code sicher umgehen kann und dabei nur solche Ausgangswerte erzeugt, die zur weiteren Verwendung im Code passen.

Das Verfahren ist für alle verbreiteten Programmiersprachen gleichermaßen anwendbar (so auch z.B. abstrakte Interpretation oder andere passende formale Methoden für die Programmiersprachen zur Verfügung stehen) und muss nicht - wie bisher - an eine bestimmte Programmiersprache aufwendig angepasst bzw. neu entwickelt werden.

Ein weiterer Vorteil besteht darin, dass die resultierenden Codeelemente und deren Prüfergebnisse dazu genutzt werden können, einen domänen-spezifischen Codeelementegenerator zu trainieren. Dies kann zum Beispiel wie im Verfahren nach dem zweiten allgemeinen Aspekt (oder einer Ausführungsform davon) erfolgen. Dadurch kann überwachtes Finetuning und/oder unüberwachtes (Reinforcement) Learning basierend auf den Prüfergebnissen durchgeführt werden, mithin das Verfahren nach dem ersten allgemeinen Aspekt (oder einer Ausführungsform davon) verbessert werden. Dadurch können dann (zukünftig) noch besser Codeelemente zu einem Code einer Software erzeugt werden.

### Kurzbeschreibung der Figuren

**Fig. 1** illustriert schematisch beispielhafte Ausführungsformen eines computerimplementierten Verfahrens für die automatisierte Erzeugung eines Codeelements eines Code einer Software.
**Fig. 2** illustriert schematisch ein computer-implementiertes Verfahren zum weiteren Trainieren eines Maschinenlernmodells.
**Fig. 3** illustriert eine beispielhafte Ausführungsform des Verfahrens für die automatisierte Erzeugung eines Codeelements eines Code einer Software.
**Fig. 4** illustriert eine beispielhafte Ausführungsform des Verfahrens für die automatisierte Erzeugung eines Codeelements eines Code einer Software, wobei eine Lücke im Code geschlossen werden soll oder ein vorheriges Codeelement im Code ersetzt werden soll.

### Detaillierte Beschreibung

Das in dieser Offenbarung vorgeschlagene Verfahren 100 ist auf die automatisierte Erzeugung von Codeelementen einer oder für eine Software gerichtet.

Die Software kann dafür ausgelegt sein, ein technisches System, insbesondere ein cyber-physisches System, insbesondere mindestens eine Recheneinheit eines Fahrzeugs und/oder Roboters, zu steuern, zu regeln und/oder zu überwachen. Insbesondere kann die Software eine embedded software sein, die dafür ausgelegt ist, auf einem eingebetteten (d.h. z.B. aufgabenspezifischen) System ausgeführt zu werden. Beispiele für den Einsatz der Software können eine Antriebs- und/oder Getriebesteuerung, eine Bremssteuerung, autonomes Fahren, eine Maschinenwahrnehmung für autonomes Fahren, eine Hybridstrategie, Batteriemanagement, etc. sein. Dank des Prüfschritts 130 kann das Verfahren 100 selbst für sicherheitsrelevante Software nach vorgegebenen Standards wie z.B. ISO 26262 (funktionale Sicherheit) zum Einsatz kommen.

Zum Beispiel können im Verfahren 100 automatisch Prompts, die an ein Maschinenlernmodell wie z.B. an ein Large Language Model (LLM) übergeben werden, um ein oder mehrere Codeelemente eines oder für einen Code zu erzeugen, um Kontext (nämlich zumindest durch ein Schnittstellenprüfkriterium) erweitert werden. Die Prompts können zum Beispiel um zusätzlichen Kontext bezüglich der Nutzung des zu erzeugenden Codes erweitert werden. Damit hat das Maschinenlernmodell eine Chance, ein oder mehrere Codeelemente zu erzeugen, die diesen Kontext erfüllen. Die einen oder mehreren vom Maschinenlernmodell erzeugten Codeelemente werden automatisch einer Überprüfung darauf unterzogen, ob sie den Kontext bezüglich seiner Nutzung erfüllen.

Das Verfahren 100 kann in einer elektronischen Programmierumgebung ausgeführt werden. Dadurch kann durch eine Benutzerschnittstelle in das Verfahren eingegriffen werden.

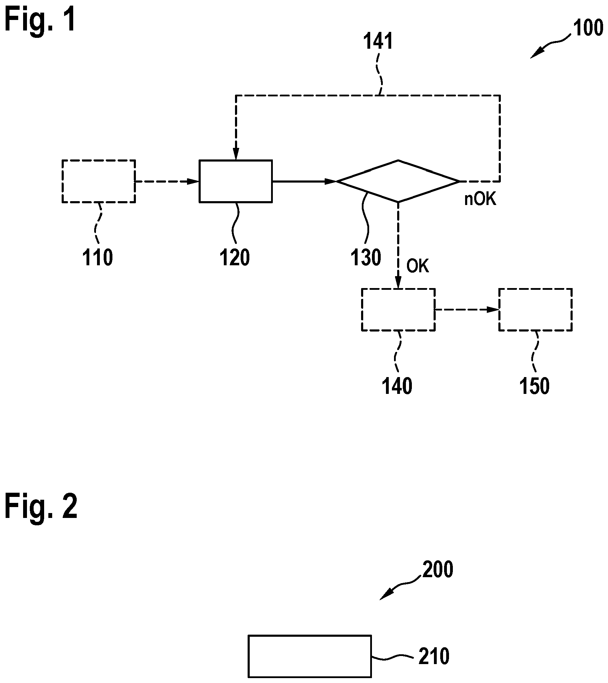

Offenbart wird dazu zunächst ein computer-implementiertes Verfahren 100, wie z.B. schematisch illustriert in **Fig. 1****,** für die automatisierte Erzeugung eines Codeelements 50 eines Code 10 einer Software.

Das Verfahren 100 umfasst Erzeugen 120, via (z.B. durch) ein Maschinenlernmodell 40, des Codeelements 50 basierend auf einer sprachlichen Vorgabe 31 an das zu erstellende Codeelement 50 und einem Schnittstellenprüfkriterium 32, das von dem zu erstellenden Codeelement 50 erfüllt werden soll.

Das Verfahren 100 umfasst Prüfen 130, ob das Codeelement 50 das Schnittstellenprüfkriterium 32 erfüllt, wobei ein Prüfergebnis resultiert. Das Prüfen 130 kann ebenfalls via (z.B. durch) das Maschinenlernmodell 40 oder ein anderes Maschinenlernmodell erfolgen. Bevorzugt aber erfolgt das Prüfen 130 nicht via (und auch nicht durch) das Maschinenlernmodell 40 und auch nicht durch ein anderes/das andere Maschinenlernmodell. Denn in diesem Fall unterliegt das Prüfen 130 nicht dem möglichen Halluzinieren eines Maschinenlernmodells.

Der Code 10 der Software kann ein Quellcode der Software sein. Der Code kann in einer oder mehreren Programmiersprachen geschrieben sein. Zum Beispiel kann der Code in der Programmiersprache C geschrieben sein. Alternativ oder zusätzlich kann der Code zum Beispiel in der Programmiersprache Rust geschrieben sein. Dank des hinreichend großen Sprachverständnisses des Maschinenlernmodells muss keine Festlegung bezüglich der Programmiersprache(n) erfolgen. In anderen Worten, das Verfahren 100 kann auf jeden Code unabhängig von der oder den Programmiersprachen angewandt werden.

Das Codeelement kann ebenfalls ein Code, mithin ein Quellcode einer Software oder ein Teil davon sein. Das Codeelement kann Teil eines größeren Code sein. Das Codeelement kann zum Beispiel eine Funktion oder Prozedur des Code umfassen oder sein.

Die sprachliche, insbesondere natürlichsprachliche Vorgabe 31 an das mindestens eine zu erstellende Codeelement 50 kann eine Spezifikation der Funktion oder der Prozedur sein. Zum Beispiel kann die sprachliche Vorgabe eine Input-Output-Signatur 12 umfassen. Eine Input-Output-Signatur 12 kann eine Spezifikation des oder der Eingangstypen und/oder des oder der Ausgangstypen sein. Eine beispielhafte Input-Output-Signatur für eine Funktion zur Berechnung einer Quadratwurzel kann "double sqrt(double x)" sein.

Das Maschinenlernmodell 40 kann ein Foundation Model (auf Deutsch etwa: Basismodell) umfassen oder sein. Ein Foundation Model kann ein großes Maschinenlernmodell sein, das auf einer großen Datenmenge in großem Umfang trainiert wurde (oft durch selbstüberwachtes Lernen oder halbüberwachtes Lernen), so dass es an eine breite Palette nachgelagerter Aufgaben angepasst werden kann. Insbesondere kann das Maschinenlernmodell ein Large Language Model (LLM) umfassen oder sein. Ein Large Language Model kann ein Sprachmodell sein, das sich durch seine Größe auszeichnet. Insbesondere kann das Large Language Model ein Chatbot sein und/oder über Chatbot-Funktionalität verfügen. Als Large Language Model kann zum Beispiel Meta AI LLaMA verwendet werden. Ein solches Large Language Model kann vorteilhaft sein, da es und insbesondere dessen Gewichte und/oder Verzerrungen zum Beispiel durch das Verfahren 200 angepasst werden können. Alternativ oder zusätzlich kann zum Beispiel Google Gemini verwendet werden. Alternativ oder zusätzlich kann als Large Language Model zum Beispiel OpenAI ChatGPT (z.B. in der Version vom 24.05.2023) verwendet werden. Alternativ oder zusätzlich kann als Large Language Model zum Beispiel Hugging Face Bloom verwendet werden. Alternativ oder zusätzlich kann das Maschinenlernmodell ein Foundation Model (auch: Multi-Domain Model) umfassen oder sein. Hier kann zum Beispiel OpenAI GPT-4 (z.B. in der Version vom 14.03.2023) verwendet werden.

Das Schnittstellenprüfkriterium 32 kann eine Vorbedingung 33 an einen Input der Funktion umfassen. Der Input kann hier eine oder mehrere Eingangsgrößen umfassen. Die Vorbedingung 33 kann ein oder mehrere Untervorbedingungen für die einen oder mehreren Eingangsgrößen umfassen. Das Schnittstellenprüfkriterium bedarf zum Beispiel dann keiner Nachbedingung 34, wenn das Codeelement keine Ausgangsgrößen hat.

Alternativ oder zusätzlich kann das Schnittstellenprüfkriterium 32 eine Nachbedingung 34 an einen Output der Funktion umfassen. Der Output kann hier eine oder mehrere Ausgangsgrößen umfassen. Die Nachbedingung 34 kann ein oder mehrere Unternachbedingungen für die einen oder mehreren Ausgangsgrößen umfassen. Das Schnittstellenprüfkriterium bedarf zum Beispiel dann keiner Vorbedingung 33, wenn das Codeelement keine Eingangsgrößen hat, z.B. weil es dem bestehenden Code vorgeschaltet werden soll.

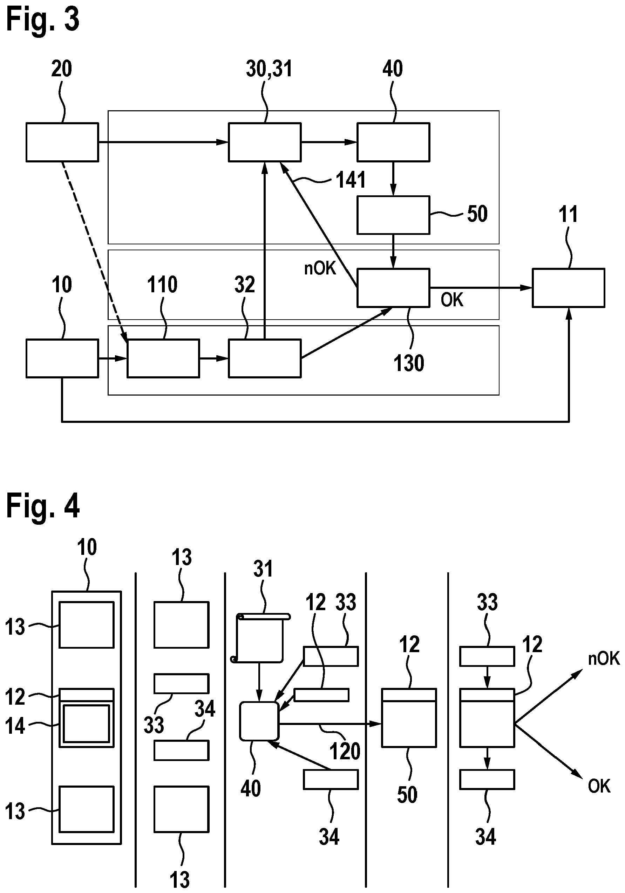

Insbesondere kann das Schnittstellenprüfkriterium 32 sowohl eine Vorbedingung 33 an einen Input der Funktion als auch eine Nachbedingung 34 an einen Output der Funktion umfassen. Das Schnittstellenprüfkriterium bedarf zum Beispiel dann sowohl einer Vorbedingung als auch einer Nachbedingung, wenn, wie in **Fig. 4** beispielhaft illustriert, das Codeelement eine Lücke in einer Berechnungskette des Code füllen oder ein Kettenglied ersetzen soll.

Ein Prompt 30 an das Maschinenlernmodell 40 kann, wie in **Fig. 3** beispielhaft illustriert, die sprachliche Vorgabe 31 umfassen. Alternativ oder zusätzlich kann der Prompt das Schnittstellenprüfkriterium 32 umfassen. Insbesondere kann der Prompt sowohl die sprachliche Vorgabe als auch das Schnittstellenprüfkriterium umfassen. Andererseits können die sprachliche Vorgabe 31 und das Schnittstellenprüfkriterium 32 auch außerhalb eines Prompts 30 als Eingangswerte dem Maschinenlernmodell bereitgestellt werden. Der Prompt kann ein natürlichsprachlicher Text sein.

Erfüllen des Schnittstellenprüfkriteriums 32 kann Erfüllen der Vorbedingung 33 und/oder der Nachbedingung 34 voraussetzen. Insbesondere kann das Schnittstellenprüfkriterium genau dann durch ein Codeelement erfüllt sein, wenn die Vorbedingung und/oder die Nachbedingung vom Codeelement erfüllt werden. Das Prüfen 130, ob das Codeelement das Schnittstellenprüfkriterium erfüllt, kann zum Beispiel eine statische Analyse umfassen. Die statische Analyse kann zum Beispiel auf abstrakter Interpretation basieren. Hierbei wird das Codeelement nicht ausgeführt. Alternativ oder zusätzlich kann das Prüfen 130, ob das Codeelement das Schnittstellenprüfkriterium erfüllt, zum Beispiel eine dynamische Analyse umfassen. Eine dynamische Analyse kann zum Beispiel Fuzzing umfassen. Hierbei wird das Codeelement auf einer Vielzahl von Inputs ausgeführt, wobei eine Vielzahl von Outputs generiert wird. Insbesondere kann das Prüfen 130, ob das Codeelement das Schnittstellenprüfkriterium erfüllt, eine statische Analyse und eine dynamische Analyse umfassen.

Sowohl die statische als auch die dynamische Analyse kann automatisiert erfolgen. Deren Ergebnisse, insbesondere wenn sie nicht hinreichend positiv sind ("nOK", kurz für nicht OK), können bei Bedarf in eine weitere sprachliche Vorgabe an ein weiteres zu erstellendes Codeelement in einer erneuten Ausführung des Verfahrens 100 verwendet werden.

Das Prüfergebnis kann einen natürlichsprachlichen Text umfassen oder ein solcher natürlichsprachlicher Text sein. Alternativ oder zusätzlich kann das Prüfergebnis eine Datenstruktur, die in einer vorbestimmten Syntax (z.B. in einer Programmiersprache) geschrieben ist, umfassen oder eine solche Datenstruktur sein. Die Datenstruktur kann zum Beispiel den natürlichsprachlichen Text umfassen. Das Prüfergebnis kann einen oder mehrere numerische Werte, insbesondere einen oder mehrere Konfidenzwerte umfassen. Dadurch kann eine Güte des mindestens eines Codeelements 50 kodiert werden, die bei der Frage, ob das Codeelement im Code integriert wird 140, berücksichtigt werden kann. Sollte es mal nicht gelingen, ein Codeelement zu erzeugen, kann das Prüfergebnis eine Information umfassen, dass die Erzeugung des mindestens einen Codeelement fehlgeschlagen ist. Dies kann zum Beispiel dann passieren, wenn der sprachliche Vorgabe 31 (und/oder den Prompt 30) und/oder das Schnittstellenprüfkriterium, mitunter aus fehlerhaftem Code abgeleitet, bereits widersprüchlich sind. Auch diese Information ist wertvoll für die Entwicklung des technischen Systems. In diesem Fall können und müssen dann die sprachliche Vorgabe und/oder das Schnittstellenprüfkriterium, gegebenenfalls auch der Code, aus dem diese abgeleitet wurden, angepasst und insbesondere verbessert werden.

Das Verfahren 100 kann weiterhin auf die Integration eines erzeugten Codeelements 50 in den Code 10 gerichtet sein. Das Verfahren 100 kann, wie z.B. als Option in **Fig. 1** illustriert, Integrieren 140 des Codeelements in den Code 10, zumindest wenn das Prüfergebnis hinreichend positiv ist ("OK"), umfassen, wobei ein überarbeiteter Code 11 resultiert. Hierbei kann zum Beispiel der Code 10 um das erzeugte 120 Codeelement 50 erweitert oder ein vorheriges Codeelement im Code durch das erzeugte 120 Codeelement 50 ersetzt werden.

Das Verfahren 100 kann weiterhin Kompilieren des überarbeiteten Code 11 umfassen. Das Verfahren 100 kann, wie z.B. als Option in **Fig. 1** illustriert, weiterhin Ausführen 150 des überarbeiteten Code (z.B. in kompilierter Form) in einem technischen System, insbesondere einem cyber-physischen System, insbesondere in einer Recheneinheit eines Fahrzeugs und/oder eines Roboters umfassen. Insoweit kann das Verfahren 100 auch ein Verfahren zur Herstellung eines Code einer Software eines technischen Systems sein.

Das Verfahren 100 kann, wie z.B. als Option in **Fig. 1** illustriert, weiterhin Wiederholen 141 des Verfahrens 100 umfassen, wenn das Prüfergebnis nicht hinreichend positiv ist ("nOK"). Eine Vielzahl von Wiederholungen ist möglich. Die sprachliche Vorgabe 31 an das zu erstellende mindestens eine Codeelement 50 kann, muss aber nicht verändert werden, denn das Maschinenlernmodell 40 kann selbst bei identischem Input unterschiedliche Ausgaben erzeugen. In anderen Worten, das Maschinenlernmodell kann eine Temperatur haben. Andererseits kann auch das Maschinenlernmodell geändert werden (z.B. durch das Verfahren 200 zum weiteren Trainieren des Maschinenlernmodells).

Das Verfahren 100 kann Ableiten 110 des Schnittstellenprüfkriterium 32 basierend auf dem Code, insbesondere via abstrakter Interpretation umfassen. Alternativ oder zusätzlich kann das Verfahren 100 Ableiten 110 des Schnittstellenprüfkriteriums basierend auf mindestens einer manuellen Annotation im Code umfassen. Insbesondere kann das Verfahren 100 Ableiten 110 des Schnittstellenprüfkriteriums basierend auf dem Code, insbesondere via abstrakter Interpretation und auf mindestens einer manuellen Annotation im Code umfassen. Das automatische Ableiten 110 des Schnittstellenprüfkriteriums erlaubt insbesondere auch das automatische Ableiten einer Vielzahl von Schnittstellenprüfkriterien an unterschiedlichen Stellen des Code. Dadurch kann der Code automatisiert an einer Vielzahl von Stellen durch das Verfahren 100 überarbeitet werden (z.B. basierend auf einer Zerlegung des Code in Funktionen und/oder Prozeduren). Ein solches Vorgehen kann zum Beispiel dann angebracht sein, wenn ein Code von einer Programmiersprache (z.B. C) in eine andere Programmiersprache (z.B. Rust) übersetzt werden soll. Dank der Zerlegung des Code können einzelne Funktionen und/oder Prozeduren separat übersetzt werden. Dadurch kann die Grundstruktur des Code auch nach der Übersetzung beibehalten werden. Zudem kann die Zerlegung des Code zum Beispiel Verantwortungsbereiche verschiedener Programmierer abbilden.

Das Verfahren 100 kann Empfangen des Code 10 umfassen. Alternativ oder zusätzlich kann das Verfahren 100 Empfangen der sprachlichen Vorgabe 31 und/oder des Prompt 30 umfassen, wobei die Reihenfolge solcher Schritte unerheblich sein kann. Alternativ oder zusätzlich kann das Verfahren 100 Empfangen des Maschinenlernmodells 40 umfassen. Das Verfahren 100 kann Empfangen eines Änderungswunsches 20 für den Code 10 umfassen. Der Prompt und/oder die sprachliche Vorgabe kann auf dem Änderungswunsch 20 basieren. Das Verfahren 100 kann Ausgeben des Codeelements 50 und/oder des Prüfergebnisses umfassen. Dies kann zum Beispiel via die elektronische Programmierumgebung erfolgen.

Das Verfahren 100 kann auf mindestens einer Eingabe eines Benutzers einer Schnittstelle der elektronischen Programmierumgebung basieren. Zum Beispiel kann das Verfahren 100 und/oder dessen Mehrfachausführungen über die elektronische Programmierumgebung (interaktiv) gesteuert werden. Dies kann zum Beispiel hilfreich sein, wenn ein Prüfergebnis für ein erzeugtes Codeelement noch nicht hinreichend positiv ist. Alternativ oder zusätzlich kann die interaktive Steuerung beim Debuggen des automatisierten Durchlaufs des Verfahrens 100 hilfreich sein. Alternativ oder zusätzlich kann zum Beispiel via eine Eingabe nach der Testfallgenerierung eine interaktive Auswahl des gewünschten Codeelements erfolgen, bevor mit dem Integrieren 140 des Codeelements in den Code fortgefahren wird.

Das Verfahren 100 kann auch Erzeugen, via das Maschinenlernmodells 40, einer Vielzahl von Codeelemente 50 basierend auf einer oder mehreren sprachlichen Vorgaben 31 an die zu erstellenden Codeelemente und einem Schnittstellenprüfkriterium 32, das von den zu erstellenden Codeelementen erfüllt werden soll, umfassen.

Das Verfahren 100 kann auch Prüfen, ob eines der erzeugten Codeelemente 50 das Schnittstellenprüfkriterium 32 erfüllt, umfassen.

Ein oder mehrere Codeelemente der Vielzahl der Codeelemente können zum Beispiel zumindest basierend auf der sprachlichen Vorgabe erzeugt werden, d.h. in einer (einzigen) Ausführung des Verfahrens 100. Alternativ oder zusätzlich können ein oder mehrere Codeelemente der Vielzahl der Codeelemente durch Mehrfachausführungen des Verfahrens 100 erzeugt werden. Vorteilhafterweise kann in Mehrfachausführungen des Verfahrens 100 die sprachliche Vorgabe und/oder der Prompt variiert werden. Andererseits müssen die sprachliche Vorgabe und/oder der Prompt nicht in Mehrfachausführungen des Verfahrens 100 variiert werden. Alternativ oder zusätzlich kann in Mehrfachausführungen des Verfahrens 100 das Maschinenlernmodell variiert werden.

Natürlichsprachlicher Text im Verfahren 100 kann auf Englisch sein. Dies kann vorteilhaft sein, weil die meisten Maschinenlernmodelle derzeit zwar nicht ausschließlich aber überwiegend auf Englisch trainiert worden sind.

Offenbart wird weiterhin ein computer-implementiertes Verfahren 200 zum weiteren Trainieren eines Maschinenlernmodells, wobei das Maschinenlernmodell dafür ausgelegt ist, ein Codeelement eines Code einer Software basierend auf einer sprachlichen Vorgabe an das zu erstellende Codeelement und einem Schnittstellenprüfkriterium, das von dem zu erstellenden Codeelement erfüllt werden soll, zu erzeugen. Wie z.B. in **Fig. 2** schematisch dargestellt, kann das Verfahren 200 Anpassen 210 des Maschinenlernmodells basierend auf einem Codeelement und einem Prüfergebnis umfassen (sowie ggf. auf der sprachlichen Anweisung an das Maschinenlernmodell), wobei das Prüfergebnis durch Prüfen 130, ob das Codeelement das Schnittstellenprüfkriterium erfüllt, resultiert.

Das Prüfen 130 kann, muss aber nicht Teil des Verfahrens 200 sein. Das Codeelement kann nach dem Verfahren 100 für die automatisierte Erzeugung eines Codeelements eines Code einer Software erzeugt 120 und geprüft 130 worden sein, wobei das Prüfergebnis resultierte. Das Verfahren 200 kann, muss aber nicht eine Fortsetzung des Verfahrens 100 sein.

Alternativ oder zusätzlich kann das Verfahren 100 via ein angepasstes Maschinenlernmodell erneut ausgeführt werden. Insbesondere kann das Maschinenlernmodell zwischen Mehrfachausführungen des Verfahrens 100 nach dem Verfahren 200 angepasst werden.

Das Maschinenlernmodell kann durch überwachtes Learning angepasst werden. Eine solche Anpassung des Maschinenlernmodells kann als überwachtes Finetuning gesehen werden. Dank des Finetuning kann ein generisches Maschinenlernmodell, das zum Beispiel auf ein allgemeines Maschinensprachverständnis trainiert worden ist, anwendungsspezifisch, d.h. hier im Hinblick auf das Erzeugen von Codeelementen für einen Code angepasst werden.

Das Finetuning des Maschinenlernmodells kann, muss aber nicht einer weiteren Anpassung des Maschinenlernmodells durch unüberwachtes (Reinforcement) vorausgehen.

Alternativ oder zusätzlich kann das Anpassen des Maschinenlernmodells zumindest basierend auf mindestens einem Codeelement sowie auf mindestens einem Prüfergebnis Berechnen mindestens einer Belohnung (englisch: reward) zumindest basierend auf dem mindestens einen Prüfergebnis und Anpassen des Maschinenlernmodells zumindest basierend auf dem mindestens einen Codeelement sowie auf der mindestens einen Belohnung umfassen. Eine solche Anpassung des Maschinenlernmodells kann als unüberwachtes (Reinforcement) Learning gesehen werden. Dadurch kann ein generisches Maschinenlernmodell, das zum Beispiel auf ein allgemeines Maschinensprachverständnis trainiert worden ist, und/oder ein solches Modell nach Finetuning, anwendungsspezifisch, d.h. hier im Hinblick auf das Erzeugen von Codeelementen für einen Code (weiter) angepasst werden. Dadurch kann das Maschinenlernmodell noch besser an den Anwendungsfall Erzeugung von Codeelementen für einen Code angepasst werden.

Eine Belohnung kann ein Parameter, insbesondere ein numerischer Parameter sein, der vergleichbar zu anderen Parametern ist, die ebenfalls Belohnungen sind. Eine Belohnung kann zum Beispiel größer, gleich oder kleiner als eine andere Belohnung sein.

Die mindestens eine Belohnung kann größer sein, wenn das mindestens eine Prüfergebnis besser ist, und die mindestens eine Belohnung kann niedriger sein, wenn das mindestens eine Prüfergebnis schlechter ist.

Ein Prüfergebnis kann schlechter, insbesondere schlecht sein, wenn bereits eine Prüfung (z.B. hinsichtlich einer Vielzahl von erzeugten Codeelementen), auf der das Prüfergebnis basiert, negativ ausgefallen ist, d.h. z.B. nicht bestanden wurde. Alternativ oder zusätzlich kann ein Prüfergebnis besser, insbesondere gut sein, wenn alle Prüfungen, positiv ausgefallen, d.h. z.B. bestanden wurden.

Das Maschinenlernmodell kann zumindest basierend auf einer Vielzahl von Codeelementen (sowie ggf. dazugehöriger sprachlicher Anweisungen an das Maschinenlernmodell) und einer Vielzahl dazugehöriger Belohnungen angepasst werden. Das Verfahren kann hier Berechnen der Belohnungen zumindest basierend auf einer Vielzahl von Prüfergebnissen je Codeelement der Vielzahl der Codeelemente umfassen. In anderen Worten, die Belohnung für einen Codeelement braucht nicht nur von dessen Prüfergebnis abzuhängen, sondern kann auch auf einem oder mehreren Prüfergebnissen zu anderen Codeelementen basieren. Eine oder mehrere Belohnungen (d.h. die Höhe derselben) kann zum Beispiel von einer Anzahl der Prüfergebnissen abhängen. Alternativ oder zusätzlich können eine oder mehrere Belohnungen von einer Anzahl von besseren Prüfergebnissen und von einer Anzahl von schlechteren Prüfergebnissen, insbesondere von einem Ungleichgewicht zwischen besseren und schlechteren Prüfergebnissen abhängen. Alternativ oder zusätzlich, können zunächst Belohnungen je Prüfergebnis berechnet werden und dann basierend auf anderen Prüfergebnissen angepasst und/oder verrechnet werden.

Das Anpassen des Maschinenlernmodells kann auf einem Reinforcement Learning Algorithmus wie zum Beispiel Proximal Policy Optimization (PPO) basieren.

Ein Teil des Maschinenlernmodells kann (gewollt) nicht angepasst werden, d.h. fixiert werden. Hier wird dann nur ein anderer Teil des Maschinenlernmodells angepasst.

Zum Beispiel können bestimmte Parameter wie z.B. Gewichte und/oder Verzerrungen, insbesondere Gewichte und/oder Verzerrungen auf früheren Schichten des Maschinenlernmodells nicht angepasst, d.h. fixiert werden. Zum Beispiel können die Anpassungen auf hintere Schichten des Maschinenlernmodells beschränkt werden. Dadurch kann sichergestellt werden, dass das Maschinenlernmodell sich nicht im Hinblick auf das Maschinensprachverständnis über Gebühr verschlechtert. Andererseits kann eine Verschlechterung des Maschinensprachverständnis insoweit durch das Anpassen angestrebt werden, als es keine Rolle für das Erzeugen von Codeelementen für einen Code spielt. Zum Beispiel ist (üblicherweise) das Maschinensprachverständnis von Shakespeare-Englisch nicht für das Erzeugen von Codeelementen erforderlich.

Das Verfahren 200 kann über die elektronische Programmierumgebung gesteuert werden. Insbesondere können das Maschinenlernmodell via die elektronische Programmierumgebung weiter angepasst werden.

In den in **Fig. 3** dargestellten beispielhaften Ausführungsformen des Verfahrens 100 kann für einen gegebenen Code zunächst ein Änderungswunsch 20 z.B. in natürlicher Sprache empfangen werden, wie z.B. das Implementieren oder das Überarbeiten (Refaktorieren) einer gewissen Funktion oder Prozedur, wobei diese Funktion oder Prozedur wie in den in **Fig. 4** dargestellten beispielhaften Ausführungsformen des Verfahrens 100 auch eine Lücke oder ein vorheriges Codeelement sein kann. Überarbeiten kann auch den Fall einer Übersetzung von einer Programmiersprache in eine andere, z.B. von C nach Rust umfassen. Auf Basis des Code 10 kann zunächst eine kompositionale Verifikation mittels abstrakter Interpretation angewendet werden, um eine oder mehrere Vorbedingungen 33 und/oder eine oder mehrere Nachbedingungen 34 und gegebenenfalls eine oder mehrere Invarianten für den geäußerten Änderungswunsch 20 zu erhalten. Dieser Schritt kann das Ableiten 110 des Schnittstellenprüfkriterium 32 basierend auf dem Code 10 implementieren. Soll neuer Code (d.h. ein neues Codeelement 50) zu einem bestehenden Code 10 erstellt werden, besteht bereits wie z.B. in **Fig. 4** eine Stelle im Code 10, an dem der neue Code (d.h. das erzeugte Codeelement 50) eingefügt werden soll. Soll Code überarbeitet werden, wird ein vorheriges Codeelement durch das neu erzeugte Codeelement 50 ersetzt.

Es kann weiterhin ein Prompt 30 an das Maschinenlernmodell 40 (insbesondere an das LLM) erstellt werden, wobei der Prompt 30 die sprachliche Anweisung 31 umfassen kann. Hierfür können der Änderungswunsch 20 mit den zu erzielenden funktionalen Eigenschaften, evtl. nötiger Kontext bezüglich des Code, sowie die Vorbedingungen 33 und/oder Nachbedingungen 34 sowie gegebenenfalls die Invarianten enkodiert werden. Im Falle des Refaktorierens kann zumindest ein vorheriges Codeelement zusätzlich im Prompt enthalten sein. Es ist auch vorstellbar, dass weitere Daten über den Code 10 wie z.B. coding guidelines, Dokumentation usw. zumindest in Teilen in den Prompt 30 einfließen.

Das Maschinenlernmodell 40 kann den Prompt 30 und/oder weitere Eingangswerte (für die sprachliche Anweisung, das Schnittstellenkriterium, die Input-Output-Signatur 12, etc.) verarbeiten und es wird mindestens eine neues Codeelement 50 ausgegeben oder aus der Antwort des Maschinenlernmodells extrahiert. Dieser neue Code (d.h. das mindestens eine neue Codeelement 50) wird auf die Einhaltung der einen oder mehreren Vorbedingung 33 und/oder der einen oder mehreren Nachbedingung sowie gegebenenfalls der einen oder mehreren Invarianten bei Benutzung durch den Code überprüft. Dies kann durch eine oder mehrere formale Methoden wie abstrakte Interpretation, Fuzzing und/oder Testing geschehen, wobei unterschiedlich starke Garantien ausgegeben werden können. Wenn das Prüfen 130 erfolgreich verläuft ("OK" in **Fig. 3-4**), kann der überarbeitete Code 11 mit entsprechenden Garantien ausgegeben werden. Schlägt das Prüfen 130 dagegen fehl ("nOK" in **Fig. 3-4**), kann z.B. der Prompt 30 überarbeitet werden, um den Fehler in einer Wiederholung des Verfahrens 100 zu verbessern. Theoretisch können Fehlschläge unendlich oft auftreten. In der Praxis ist dies jedoch extrem unwahrscheinlich (solange man eine realisierbare Aufgabe stellt), da ein Maschinenlernmodell durch seine internen Parameter und passende Prompts schließlich zu passenden Ausgaben gebracht werden kann. Man kann hier zur Sicherheit aber auch einen Zähler einbauen und nach einer vorbestimmten Anzahl von Schritten, z.B. 10 Schritten den besten Vorschlag zurückgeben mit entsprechenden Hinweisen bezüglich etwaiger Unzulänglichkeiten. Sollte das Maschinenlernmodell tatsächlich keine hinreichend positive Lösung finden, kann das Problem mit den gesammelten Informationen auch an den Benutzer der elektronischen Programmierumgebung zurückgegeben werden, damit der Benutzer basierend auf diesen einen neuen, verfeinerten Prompt formulieren kann. Optional kann der Benutzer auch in diesem Fall durch ein weiteres Maschinenlernmodell ersetzt werden.

In **Fig. 4** ist ein beispielhafter Ablauf des Verfahrens 100 zu sehen. Es existiert (erste Spalte in **Fig. 4**) hier beispielhaft zunächst ein Code 10 bestehend aus zwei Funktionen 13 und einer Stelle 14, an der neuer Code eingefügt werden soll. In einem Analyseschritt (zweite Spalte in **Fig. 4**) können z.B. mittels kompositionaler Verifikation mit abstrakter Interpretation anhand der bestehenden Funktionen 13 Vorbedingungen 33 und Nachbedingungen 34 (allgemeiner: das Schnittstellenkriterium 32) für die zu bearbeitende Stelle ("Lücke") berechnet werden. Diese können im nächsten Schritt (dritte Spalte in **Fig. 4**) genutzt werden, um z.B. den Prompt 30 für das Maschinenlernmodell 40 (z.B. für das LLM) zu erzeugen. Zusätzlich kann noch die sprachliche Vorgabe an das zu erstellende Codeelemente, d.h. z.B. eine (funktionale) Spezifikation für die zu bearbeitende Stelle verwendet werden, ebenso wie die Input-Output-Signatur der zu generierenden Funktion. Der Prompt kann auch ein Anweisung enthalten, ob neuer Code generiert werden soll. Im nächsten Schritt (vierte Spalte in **Fig. 4**) erzeugt 120 das Maschinenlernmodell 40 ein Codeelement 50 basierend auf dem erzeugten Prompt 30. Dieses Codeelement 50 kann dann im letzten Schritt (fünfte Spalte in **Fig. 4**) mit existierenden formalen Methoden auf die Einhaltung der Vorbedingungen 33 und Nachbedingungen 34 (allgemeiner des Schnittstellenkriteriums 32) überprüft 130. Ist das Prüfergebnis hinreichend positiv, kann die Lücke 12 durch das erzeugte 120 Codeelement 50 geschlossen werden.

Nachfolgend wird ein Beispiel wiedergegeben. Da die meisten derzeitigen Maschinenlernmodelle besser mit Englisch als mit Deutsch umgehen, ist das Beispiel in Englisch (und in C).

Erster Beispielprompt:
"Generate a square root function with the following signature: double sqrt (double x).

It should realize the square root functionality: In mathematical terms, if you have a number x, its square root is another number y, which when squared (meaning y*y) equals x. To illustrate, both 4 and -4 are square roots of 16, as squaring them (4*4 or -4*-4) gives us 16.

Each non-negative real number x has a singular non-negative square root, often termed the principal square root or just the square root. This is represented as \sqrt{x}, with the symbol \sqrt{} known as the radical sign or radix. For instance, the principal square root of 9 is 3, denoted as \sqrt{9} = 3. The number or expression that we're finding the square root of is called the radicand, which in this example is 9. For any non-negative x, the principal square root can also be expressed in exponent notation as x^(1/2).

The generated square root function only needs to handle non-negative input values and should only produce non-negative output values."

In diesem Prompt ist hier also auch ein Schnittstellenkriterium umfassend die Vorbedingung

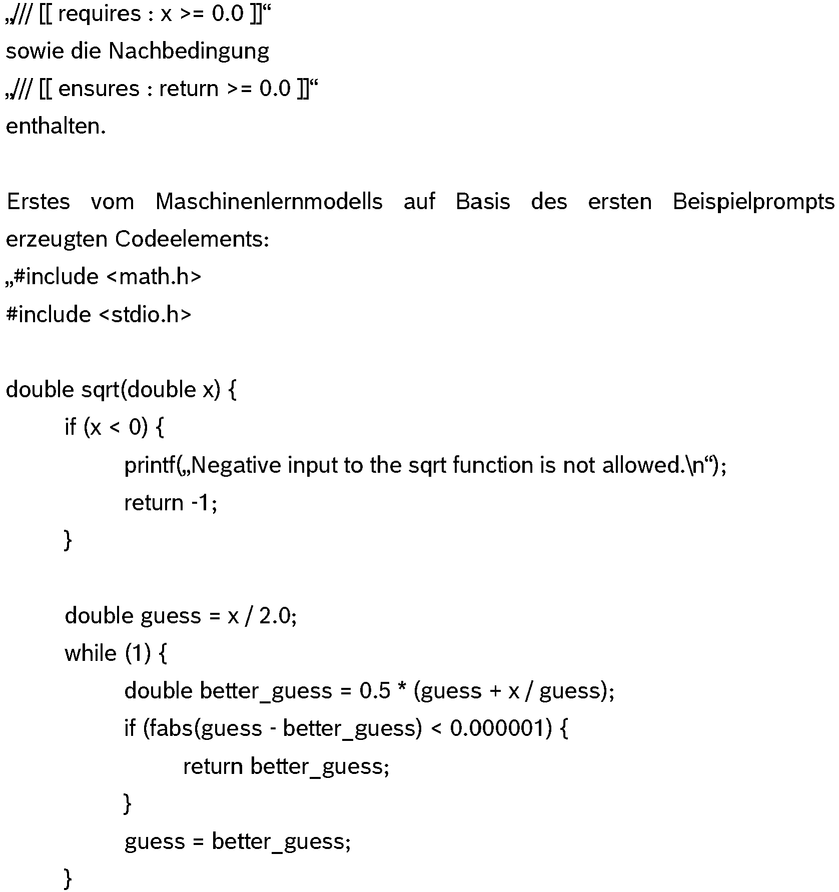

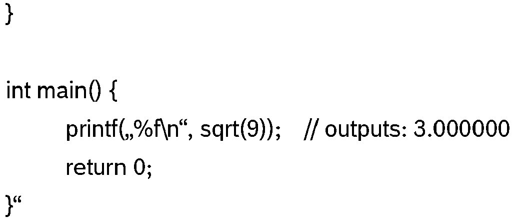

Beispielhafte Verifikationsausgabe beim Prüfen, ob das erzeugte Codeelement das Schnittstellenkriterium erfüllt. Hier wurde Astrée als Tool für abstrakte Interpretation angewandt.

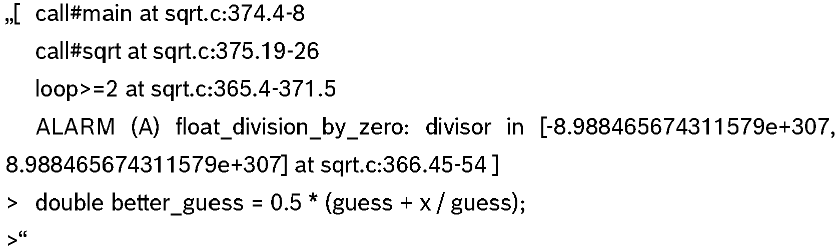

Hier wurde also der Fehler festgestellt, dass es im erzeugten Codeelement zu einer Division durch Null kommen kann, da x = 0 gemäß der Vorbedingung zulässig ist.

Beispielhafter weiterer Prompt, der darauf gerichtet ist, das noch fehlerhafte Codeelement zu korrigieren:
"In your previous attempt you produced code that could lead to a float division by zero in the following line: double better_guess = 0.5 * (guess + x / guess)."

Zweites vom Maschinenlernmodells auf Basis des auch des weiteren Prompts erzeugten Codeelements (Änderung zur ersten Beispielausgabe fett hervorgehoben):
"#include <math.h>
#include <stdio.h>

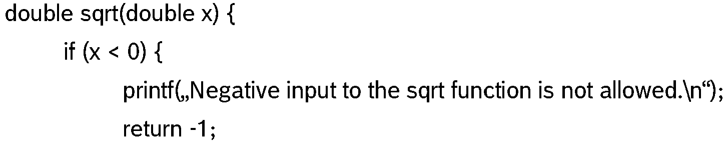

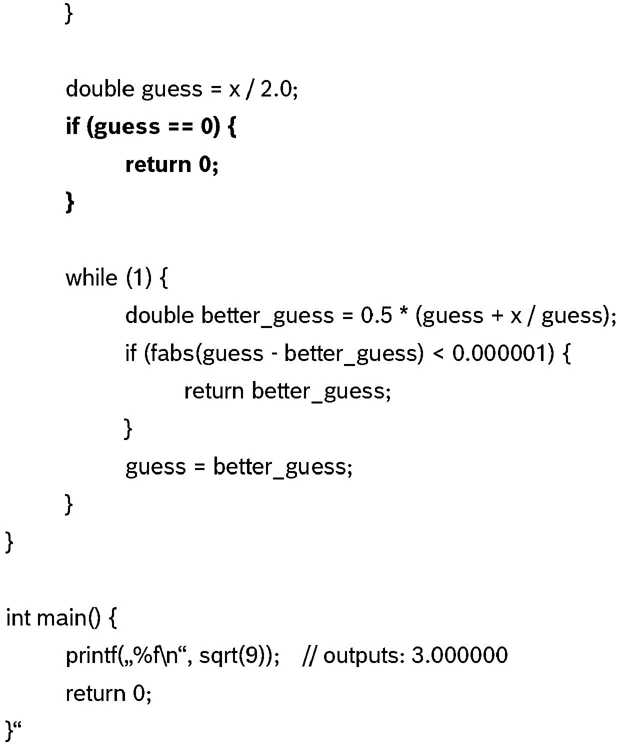

Der Fehler im erzeugten Codeelement wurde also in der Tat richtig korrigiert. Dieses Beispiel zeigt auch, dass das Erzeugen 130 des Codeelements auf einem zuvor erzeugten Codeelement und/oder einem zuvor benutzten Prompt basieren kann.

Offenbart wird weiterhin ein Computer-System, das dafür ausgelegt ist, das computer-implementierte Verfahren 100 für die automatisierte Erzeugung eines Codeelements eines Code einer Software auszuführen. Alternativ oder zusätzlich kann das Computer-System dafür ausgelegt sein, das computer-implementiertes Verfahren 200 zum weiteren Trainieren eines Maschinenlernmodells auszuführen. Insbesondere kann das Computer-System dafür ausgelegt sein, das computer-implementierte Verfahren 100 für die automatisierte Erzeugung eines Codeelements eines Code einer Software und (z.B. im Anschluss) das computer-implementierte Verfahren 200 zum weiteren Trainieren eines Maschinenlernmodells auszuführen. Das Computer-System kann einen Prozessor und/oder einen Arbeitsspeicher umfassen.

Offenbart wird weiterhin ein Computer-Programm, das dafür ausgelegt ist, das computer-implementierte Verfahren 100 für die automatisierte Erzeugung eines Codeelements eines Code einer Software auszuführen. Alternativ oder zusätzlich kann das Computer-Programm dafür ausgelegt sein, das computer-implementierte Verfahren 200 zum weiteren Trainieren eines Maschinenlernmodells auszuführen. Insbesondere kann das Computer-Programm dafür ausgelegt sein, das computer-implementierte Verfahren 100 für die automatisierte Erzeugung eines Codeelements eines Code einer Software und (z.B. im Anschluss) das computer-implementierte Verfahren 200 zum weiteren Trainieren eines Maschinenlernmodells auszuführen. Das Computer-Programm kann z.B. in interpretierbarer oder in kompilierter Form vorliegen. Es kann (auch in Teilen) zur Ausführung z.B. als Bit- oder Byte-Folge in den RAM eines Computers geladen werden.

Offenbart wird weiterhin ein computer-lesbares Medium oder Signal, das das Computer-Programm speichert und/oder enthält. Das Medium kann z.B. eines von RAM, ROM, EPROM, HDD, SSD, ... umfassen, auf/in dem das Signal gespeichert wird.

## Patentansprüche

1. Computer-implementiertes Verfahren (100) für die automatisierte Erzeugung eines Codeelements (50) eines Code (10) einer Software, umfassend:
- Erzeugen (120), via ein Maschinenlernmodell (40), des Codeelements (50) basierend auf einer sprachlichen Vorgabe (31) an das zu erstellende Codeelement (50) und einem Schnittstellenprüfkriterium (32), das von dem zu erstellenden Codeelement (50) erfüllt werden soll, optional wobei ein Prompt (30) an das Maschinenlernmodell (40) die sprachliche Vorgabe und das Schnittstellenprüfkriterium (32) umfasst;
- Prüfen (130), ob das Codeelement (50) das Schnittstellenprüfkriterium (32) erfüllt, wobei ein Prüfergebnis resultiert.

2. Verfahren (100) nach Anspruch 1, wobei die Software dafür ausgelegt ist, ein technisches System, insbesondere ein cyber-physisches System, insbesondere eine Recheneinheit eines Fahrzeugs und/oder eines Roboters zu steuern, zu regeln und/oder zu überwachen.

3. Verfahren (100) nach Anspruch 1 oder 2, wobei das Verfahren (100) in einer elektronischen Programmierumgebung ausgeführt wird.

4. Verfahren (100) nach einem der vorhergehenden Ansprüche, umfassend:
- Integrieren (140) des Codeelements (50) in den Code (10), zumindest wenn das Prüfergebnis hinreichend positiv ist, wobei ein überarbeiteter Code (11) resultiert;
wobei der Code (10) um das Codeelement (50) erweitert wird oder ein vorheriges Codeelement im Code (10) durch das Codeelement (50) ersetzt wird.

5. Verfahren (100) nach Anspruch 4, umfassend:
- Ausführen (150) des überarbeiteten Code (11) in einem technischen System, insbesondere einem cyber-physischen System, insbesondere in einer Recheneinheit eines Fahrzeugs und/oder eines Roboters.

6. Verfahren (100) nach einem der vorhergehenden Ansprüche, umfassend:
- Ableiten (110) des Schnittstellenprüfkriterium (32) basierend auf dem Code (10), insbesondere via abstrakter Interpretation, und/oder auf mindestens einer manuellen Annotation im Code (10).

7. Verfahren (100) nach einem der vorhergehenden Ansprüche, wobei das Codeelement (50) eine Funktion (13) oder Prozedur des Code (10) umfasst; und wobei die sprachliche Vorgabe an das zu erstellende Codeelement (50) eine Spezifikation der Funktion (13) oder der Prozedur und, optional eine Input-Output-Signatur (12) umfasst.

8. Verfahren (100) nach Anspruch 7, wobei das Schnittstellenprüfkriterium (32) eine Vorbedingung (33) an einen Input der Funktion und/oder eine Nachbedingung (34) an einen Output der Funktion (13) umfasst, wobei Erfüllen des Schnittstellenprüfkriteriums Erfüllen der Vorbedingung (33) und/oder der Nachbedingung (34) voraussetzt.

9. Verfahren (100) nach einem der vorhergehenden Ansprüche, wobei das Prüfen (130), ob das Codeelement (50) das Schnittstellenprüfkriterium (32) erfüllt, eine statische Analyse und/oder eine dynamische Analyse umfasst.

10. Verfahren (100) nach einem der vorhergehenden Ansprüchen, umfassend:
- Wiederholen (141) des Verfahrens (100) nach einem der vorhergehenden Ansprüche, wenn das Prüfergebnis nicht hinreichend positiv ist, optional wobei die sprachliche Vorgabe an das zu erstellende Codeelement (50) und/oder das Maschinenlernmodell (40) geändert wird.

11. Computer-implementiertes Verfahren (200) zum weiteren Trainieren eines Maschinenlernmodells (40),
wobei das Maschinenlernmodell (40) dafür ausgelegt ist, ein Codeelement (50) eines Code (10) einer Software basierend auf einer sprachlichen Vorgabe (31) an das zu erstellende Codeelement (50) und einem Schnittstellenprüfkriterium (32), das von dem zu erstellenden Codeelement (150) erfüllt werden soll, zu erzeugen; das Verfahren (200) umfassend:
- Anpassen (210) des Maschinenlernmodells (40) basierend auf einem Codeelement (50) und auf einem Prüfergebnis, wobei das Prüfergebnis durch Prüfen, ob das Codeelement (50) das Schnittstellenprüfkriterium (32) erfüllt, resultiert.

12. Verfahren (200) nach Anspruch 11, wobei das Codeelement (50) nach dem Verfahren (100) für die automatisierte Erzeugung eines Codeelements (50) eines Code (10) einer Software, nach einem der Ansprüche 1 bis 10 erzeugt (120) und geprüft (130) wurde.

13. Computer-System, dafür ausgelegt,
das computer-implementiertes Verfahren (100) für die automatisierte Erzeugung eines Codeelements (50) eines Code (10) einer Software nach einem der Ansprüche 1 bis 10, und/oder
das computer-implementiertes Verfahren (200) zum weiteren Trainieren eines Maschinenlernmodells nach Anspruch 11 oder 12 auszuführen.

14. Computer-Programm, dafür ausgelegt,
das computer-implementiertes Verfahren (100) für die automatisierte Erzeugung eines Codeelements (50) eines Code (10) einer Software nach einem der Ansprüche 1 bis 10, und/oder
das computer-implementiertes Verfahren (200) zum weiteren Trainieren eines Maschinenlernmodells nach Anspruch 11 oder 12 auszuführen.

15. Computer-lesbares Medium oder Signal, das das Computer-Programm nach Anspruch 14 speichert und/oder enthält.
